# FASCICULE DE BREVET EUROPEEN

(11) **EP 2 768 098 B1**
(45) Date de publication et mention de la délivrance du brevet: **23.09.2015**
(21) Numéro de dépôt: 14152994.1
(22) Date de dépôt: 29.01.2014
(51) Int. Cl.: H02G 3/04, H02G 3/06

(54) **Éclisse d'assemblage de tronçons de chemins de câbles en treillis de fil**
Verbinder für Kabelrinnenabschnitte aus Drahtgitter
Splice plate for mesh cable trays sections

(30) Priorité: 15.02.2013 FR 1351342
(43) Date de publication de la demande: 20.08.2014
(73) Titulaire: Niedax France, 62400 Bethune (FR)
(72) Inventeur: Colmont, Gaetan, 62400 BETHUNE (FR)
(74) Mandataire: Louiset, Raphael

(56) Documents cités:
- FR-A1- 2 857 792
- FR-A1- 2 947 676

## Description

L'invention a trait au domaine des chemins de câbles, et plus précisément à l'assemblage de tronçons de chemins de câbles.

Un chemin de câbles est une structure permettant de supporter des câbles, aussi bien dans une configuration verticale qu'horizontale, notamment des câbles électriques, des câbles téléphoniques, des câbles de fibres optiques, des câbles de réseau informatique. Les chemins de câbles sont généralement réalisés en métal, notamment en acier inoxydable, mais ils peuvent être réalisés en matière plastique ou composite.

Il existe sommairement deux familles de chemins de câbles, à savoir les chemins de câble en tôle pliée (éventuellement perforée), et les chemins de câble en treillis de fil.

Les chemins de câbles en treillis de fil sont formés de fils longitudinaux, appelés fils de chaîne, croisés et soudés avec des fils transversaux, appelés fils de trame. Les chemins de câbles peuvent subir un traitement ultérieur, en fonction de l'environnement dans lequel ils sont destinés à être placés. Ainsi, les chemins de câbles métalliques peuvent subir une galvanisation, être plastifiés ou encore revêtus d'une couche de peinture ou de résine (par exemple de résine époxy).

Une technique connue pour l'assemblage de deux tronçons de chemins de câbles successifs consiste à utiliser des éclisses.

Le document FR 2 858 129 (CONSTRUCTIONS ELECTRIQUES DE LA SEINE) présente ainsi une éclisse comprenant deux pattes rabattables, repliées l'une vers l'autre en englobant au moins deux fils de trame appartenant respectivement aux deux tronçons successifs, et reliées entre elles par une âme, ainsi qu'une tige filetée en saillie de l'âme sur laquelle vient en prise hélicoïdale un écrou apte à maintenir les pattes en position, de sorte à emprisonner les fils de trame des deux tronçons successifs.

Le document FR 2 857 792 (CONSTRUCTIONS ELECTRIQUES DE LA SEINE) présente une éclisse en tôle, destinée à relier deux tronçons successifs de supports de conduits en treillis, comportant une âme et deux pattes sertissables formées d'une pièce avec l'âme, ces deux pattes s'étendant dans un même sens à partir d'un même bord longitudinal de l'âme. Le document FR 2 947 676 (SCHNEIDER ELECTRIC) montre une éclisse similaire.

Ces solutions ont cependant pour inconvénient majeur de nécessiter l'utilisation d'un outil pour solidariser l'éclisse sur les tronçons.

L'outil nuit à la facilité, à l'ergonomie et à la rapidité de pose. En effet, l'opérateur voit au moins l'une de ses mains monopolisée par la manipulation de l'outil, cependant qu'il doit de l'autre main tenir l'éclisse en position à cheval sur les tronçons de chemins de câble, tout en se tenant en équilibre dans une position inconfortable, généralement sur un escabeau ou dans le meilleur des cas sur un échafaudage.

Un objectif est de proposer une technique d'assemblage de tronçons de chemins de câble en treillis de fil, qui procure au moins l'un des avantages (et de préférence tous les avantages) suivants :
- simplicité d'utilisation,
- rapidité de pose,
- ergonomie améliorée,
- possibilité de montage par un opérateur unique,
- robustesse d'assemblage.

Il est proposé, en premier lieu, une éclisse pour l'assemblage d'un premier tronçon et d'un deuxième tronçon de chemins de câbles en treillis de fil, cette éclisse comprenant un corps central et deux rebords s'étendant à l'équerre et selon un sens longitudinal de l'éclisse, depuis deux bords longitudinaux opposés du corps dans laquelle l'éclisse comprend :
- deux paires de découpes en L formées dans les rebords, à savoir une paire en partie centrale de l'éclisse et une paire à une extrémité arrière de l'éclisse, chaque découpe présentant une section transversale s'ouvrant sur une bordure libre du rebord et une section longitudinale s'étendant à partir de la section transversale, chaque paire de découpe étant apte à coopérer avec un fil de trame du premier tronçon ;
- une patte élastique portée par le corps au droit de l'une des paires de découpes pour bloquer au moins l'un des fils de trame dans la section longitudinale de ladite paire de découpes ;
- une ouverture oblongue pratiquée transversalement sur le corps et les rebords, et apte à recevoir un fil de trame d'extrémité du deuxième tronçon ;
- une griffe élastique formée dans le corps au droit et sur un bord de l'ouverture oblongue, apte à bloquer le fil de trame d'extrémité du deuxième tronçon dans l'ouverture oblongue.

Il est proposé, en second lieu, un procédé d'assemblage d'un premier tronçon et d'un deuxième tronçon de chemins de câbles au moyen d'une éclisse dans lequel le procédé comprend les opérations consistant à:
- insérer les fils de trame du premier tronçon dans les sections transversales des découpes en L des rebords de l'éclisse ;
- translater l'éclisse vers le fond des sections longitudinales des découpes en L jusqu'à l'encliquetage de l'un des fils de trame par la patte élastique ;
- engager le fil de trame d'extrémité du deuxième tronçon dans l'ouverture oblongue vers le fond de celle-ci jusqu'à son encliquetage par la griffe élastique.

Il est proposé, en troisième lieu, un chemin de câbles comprenant un premier tronçon, un deuxième tronçon et une éclisse.

Diverses caractéristiques supplémentaires peuvent être prévues, seules ou en combinaison :
- la patte élastique et la griffe élastique coopèrent avec des fils de trame des tronçons par encliquetage des fils de trame du premier tronçon et d'un fil de trame du deuxième tronçon lorsque ceux-ci sont respectivement dans les paires de découpes en I ainsi que dans l'ouverture oblongue ;
- la patte élastique est formée par une découpe en u dans le corps de l'éclisse définissant une lumière apte à recevoir la patte élastique, et un bord de jonction par lequel la patte est reliée au corps ;
- le corps de l'éclisse comporte une paire de pattes élastiques ;
- la griffe élastique est formée en saillie d'un bord transversal de l'ouverture ;
- la griffe élastique est recourbée vers un fond de l'ouverture ;
- le corps de l'éclisse comporte une paire de griffes élastiques ;
- le corps de l'éclisse comprend un pli sensiblement à angle droit définissant deux facettes perpendiculaires l'une par rapport à l'autre, cette éclisse étant apte à coopérer avec une aile latérale et le fond de chacun des tronçons opposés ;

D'autres caractéristiques et avantages de l'invention apparaîtront plus clairement et de manière concrète à la lecture de la description ci-après de modes de réalisation préférés, laquelle est faite en référence aux dessins annexés dans lesquels :
- la figure 1 est une vue en perspective de dessus de deux tronçons de chemins de câbles assemblés au moyen d'une éclisse, comprenant deux détails d'un premier mode de réalisation et d'un deuxième mode de réalisation différents de l'éclisse.
- la figure 2 est une vue en perspective de dessous de deux tronçons de chemins de câble assemblés au moyen d'une éclisse, comprenant deux détails d'un premier mode de réalisation et d'un deuxième mode de réalisation différents de l'éclisse.
- la figure 3 est une vue en perspective de dessus d'une éclisse selon le premier mode de réalisation.
- la figure 4 est une vue en perspective de dessus d'une éclisse selon le deuxième mode de réalisation.
- la figure 5 est une vue en coupe de l'éclisse selon le premier mode de réalisation, suivant le plan de coupe V-V de la figure 1.
- la figure 6 est une vue de dessus d'un assemblage au moyen d'une éclisse selon le deuxième mode de réalisation.

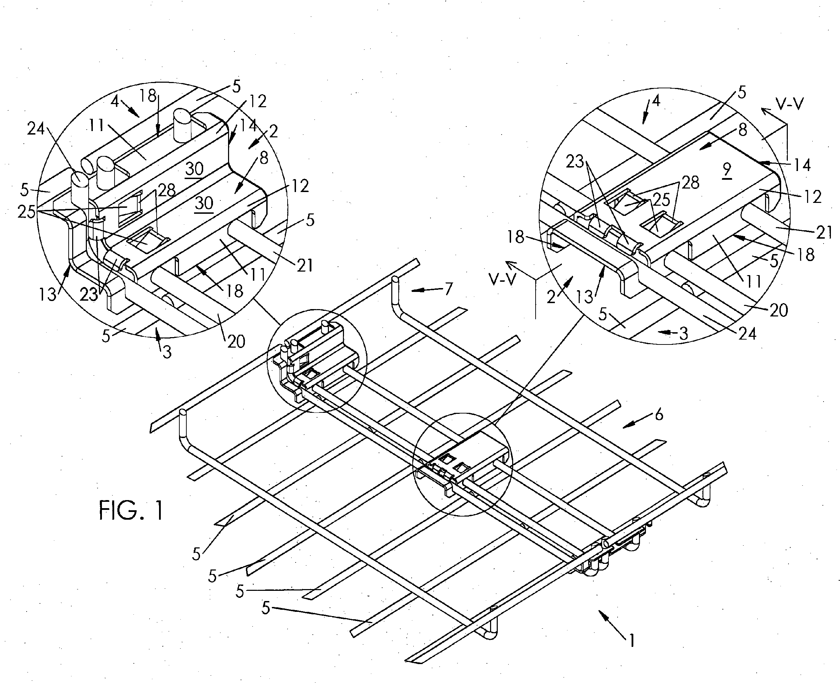

Sur la figure 1 est représenté, vu de dessus, un chemin **1** de câble formé par assemblage, au moyen d'éclisses **2,** de deux tronçons **3, 4** de chemins de câbles en treillis de fil, à savoir un premier tronçon **3** et un deuxième tronçon **4.**

Chaque tronçon **3, 4** est formé de fils croisés et soudés, à savoir des fils longitudinaux, appelés fils **5** de chaîne, et des fils transversaux, appelés fils **20, 21, 24** de trame, à profil en U, ayant une section centrale et deux bras latéraux qui s'étendent sensiblement à l'équerre à partir de la section centrale. Chaque tronçon forme ainsi un profilé en U ayant un fond **6** et, de part et d'autre de celui-ci, deux ailes **7** latérales.

Par commodité, dans la suite de cette description, le premier tronçon sera nommé tronçon **3** avant et le deuxième tronçon sera nommé tronçon **4** arrière.

Chaque éclisse **2** se présente sous la forme d'une pièce métallique, de préférence monobloc. L'éclisse **2** comporte un corps **8** central allongé suivant une direction longitudinale (qui, lorsque l'éclisse est en position à cheval sur les tronçons **3, 4,** correspond à la direction d'extension des fils **5** de chaîne). Le corps **8** présente une face **9** externe et une face **10** interne opposée. L'éclisse **2** comprend en outre deux rebords **11** latéraux qui s'étendent à l'équerre depuis deux bords **12** longitudinaux opposés du corps **8,** du côté de la face **10** interne. L'éclisse **2** se termine longitudinalement, de part et d'autre, par un bord **13** d'extrémité avant transversal et un bord **14** d'extrémité arrière transversal opposé.

Chaque rebord **11** comprend deux découpes **15, 16** en forme de L décalées longitudinalement, à savoir une découpe **16** arrière formée dans le rebord **11** au voisinage du bord **14** d'extrémité arrière de l'éclisse **2,** et une découpe **15** avant décalée longitudinalement, par rapport à la découpe **16** arrière, vers l'avant de l'éclisse **2,** la découpe **15** avant se trouvant alors approximativement en partie centrale de l'éclisse **2.**

Selon les modes de réalisation illustrés sur les figures, la découpe **15** avant est située à plus faible distance du bord **13** d'extrémité avant que du bord **14** d'extrémité arrière. Chaque découpe **15, 16** en L présente une section **17** transversale s'ouvrant sur une bordure **18** libre longitudinale du rebord **11,** et une section **19** longitudinale qui s'étend longitudinalement (en l'espèce vers l'avant) à partir de la section **17** transversale, jusqu'à un fond arrondi.

Les découpes **16** arrière des deux rebords **11** forment ensemble une première paire fonctionnelle et sont à cet effet agencées pour pouvoir accueillir conjointement un premier fil **20** de trame du tronçon **4** arrière par insertion du côté de la face **10** interne de l'éclisse **2.** Il en est de même pour les découpes **15** avant des deux rebords **11** qui forment ensemble une deuxième paire fonctionnelle et sont à cet effet agencées pour pouvoir accueillir conjointement, par insertion du côté de la face **10** interne de l'éclisse **2,** un deuxième fil **21** de trame du tronçon **4** arrière, écarté du premier fil **20** de trame d'une distance égale à l'écartement entre la section **17** transversale de la découpe **15** avant et la section **17** transversale de la découpe **16** arrière d'un même rebord **11.**

L'éclisse **2** comprend par ailleurs, au voisinage du bord **13** d'extrémité avant, une ouverture **22** oblongue s'étendant transversalement, formée dans le corps **8** et partiellement dans les rebords **11.** Cette ouverture **22** est destinée à recevoir un fil **24** de trame du tronçon **3** avant par insertion du côté de la face **9** externe du corps **8.** L'ouverture **22** se termine par un fond arrondi.

L'éclisse **2** est munie de moyens de verrouillage sur les tronçons **3, 4.**

Plus précisément, le corps **8** de l'éclisse **2** est muni d'au moins une patte **25** élastique située au droit des découpes **15, 16** de l'une des paires (en l'espèce les découpes **15** avant), et agencée pour retenir par encliquetage chaque fil **20, 21** de trame correspondant à chaque découpes **15, 16.**

Selon un mode préféré de réalisation, le corps **8** est muni d'une paire de pattes **25** élastiques disposées côte à côte, au droit de chaque découpe **15** avant.

Chaque patte **25** élastique est formée par une découpe **26** en U pratiquée dans le corps **8,** la patte **25** ayant ainsi un contour rectangulaire. La patte **25** est sensiblement plate et est pliée à partir d'un bord **28** de jonction avec le corps **8,** pour former une saillie du côté de la face **10** interne du corps **8.**

La patte **25** se termine par une extrémité **27** libre qui s'étend au droit du fond de la section **19** longitudinale de la découpe **15** avant, à l'épaisseur d'un deuxième fil **21** de trame près. La patte **25** s'étend, à partir de son bord **28** de jonction avec le corps **8,** dans la même direction que la section **19** longitudinale de la découpe **15** avant au droit de laquelle elle se trouve. Ainsi, dans les exemples de réalisation illustrés, où la section **19** longitudinale de chaque découpe **15** avant s'étend vers l'avant à partir de la section **17** transversale, chaque patte **25** s'étend en saillie vers l'avant à partir de son bord **28** de jonction avec le corps **8.**

De même, le corps **8** de l'éclisse **2** est muni d'au moins une griffe **23** élastique formée au droit de l'ouverture **22** pour y retenir par encliquetage le fil **24** de trame du tronçon **3** avant. Selon un mode préféré de réalisation, le corps **8** est muni d'une paire de griffes **23** disposées côte à côte.

Chaque griffe **23** est formée en saillie à partir d'un bord **29** transversal (en l'espèce un bord transversal arrière) délimitant l'ouverture **22.** Selon les exemples illustrés sur les figures, chaque griffe **23** est recourbée vers le fond de l'ouverture **22.**

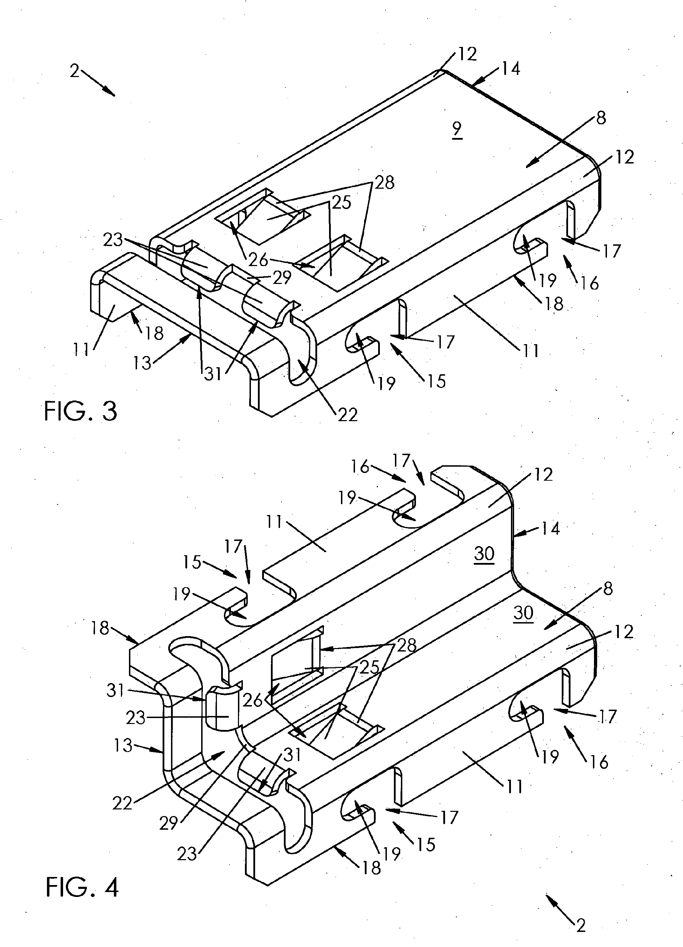

Selon un premier mode de réalisation, illustré sur la figure 3, le corps **8** central est plan, de sorte que l'éclisse **2** se présente sous la forme d'un cavalier, à section transversale en U. Cette éclisse **2** permet de réaliser l'assemblage de deux tronçons **3, 4** au niveau de leurs fonds **6** respectifs aboutés.

Selon un second mode de réalisation, illustré sur la figure 4, le corps **8** central comporte un pli longitudinal qui le sépare en deux facettes **30** à angle droit, de sorte que l'éclisse **2** présente en section transversale une forme générale en W. Chaque facette **30** porte alors une griffe **23** élastique et une patte **25** élastique. Cette éclisse **2** permet de réaliser l'assemblage de deux tronçons **3, 4** au niveau de la jonction entre leurs ailes **7** latérales et leurs fonds **6** respectifs aboutés.

Les éclisses **2** en U et les éclisses **2** en W peuvent être utilisées conjointement, comme illustré sur la figure 1.

Les éclisses **2** s'adaptent aux tronçons **3, 4** sur lesquels elles sont montées. A cet effet, la distance entre les sections **17** transversales des découpes **15, 16** en L est égale à la distance entre chaque fil 20, **21** de trame du tronçon **4** arrière. L'exemple représenté sur les dessins est à titre illustratif; la distance entre chaque fil **20, 21** de trame du tronçon **4** arrière (et donc entre les sections **17** transversales des découpes **15, 16** en L) pourrait être supérieure ou, au contraire, inférieure.

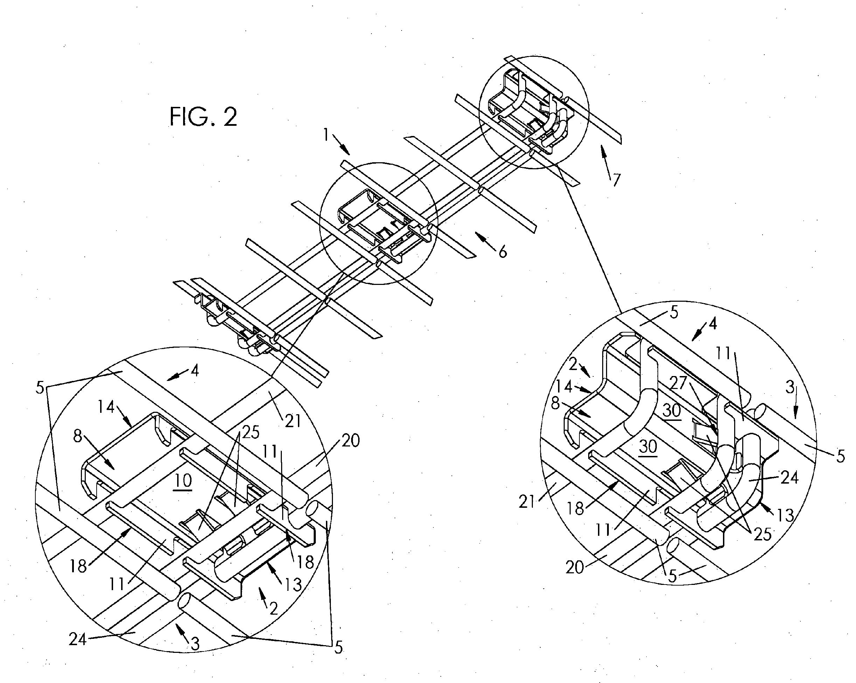

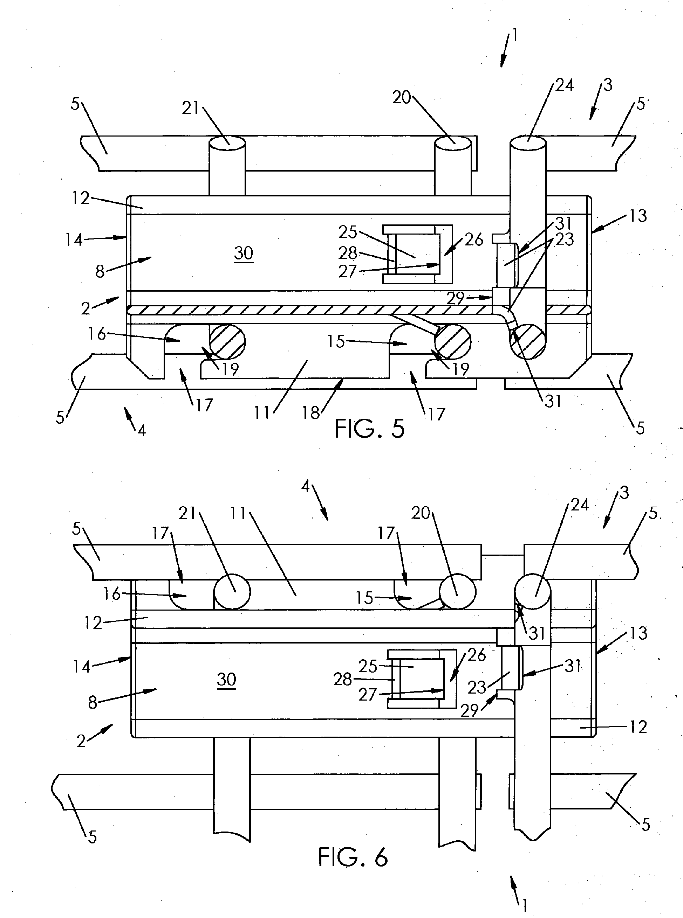

En utilisation (figures 1, 2, 5 et 6), l'opérateur effectue un prémontage de l'éclisse **2** par encliquetage de celle-ci par sur le tronçon **4** arrière par l'intérieur de celui-ci, puis assemble les tronçons **3, 4** par encliquetage de l'éclisse **2** sur le tronçon **3** avant par l'extérieur de celui-ci.

Plus précisément, l'opérateur introduit simultanément les deux fils **20, 21** de trame d'extrémité du tronçon **4** arrière dans les découpes **15, 16** en L des rebords **11,** d'abord transversalement dans la section **17** transversale puis par glissement (en l'espèce vers l'avant) dans la section **19** longitudinale. Chacun des fils **20, 21** de trame est translaté longitudinalement par rapport à l'éclisse **2** jusqu'à atteindre le fond de la section **19** longitudinale.

En glissant le long de la section **19** longitudinale, le premier fil **20** de trame repousse la patte **25** élastique en direction du corps **8.** Le premier fil **20** de trame parvenu au fond de la section **19** longitudinale de la découpe **15** avant dépasse l'extrémité **27** libre de la patte **25,** qui par élasticité retrouve sa position initiale. Dans cette position, l'extrémité **27** libre de la patte **25** forme une butée qui retient par encliquetage le premier fil **20** de trame au fond de la section **19** longitudinale.

L'éclisse **2** est ainsi montée et maintenue sur le tronçon **4** arrière. Cette opération peut être faite in situ lors du montage des chemins **1** de câbles sur un chantier ou alors en prémontage avant assemblage in situ.

Pour assembler le tronçon **3** avant et le tronçon **4** arrière sur lequel l'éclisse **2** est prémontée, l'opérateur introduit le fil **24** de trame d'extrémité du tronçon **3** avant dans l'ouverture **22** oblongue de l'éclisse **2.** Lors de l'insertion du fil **24** de trame d'extrémité du tronçon **3** avant dans l'ouverture **22** oblongue, le fil **24** de trame repousse chaque griffe **23** élastique (en l'espèce vers l'arrière).

Lorsque le fil **24** de trame d'extrémité du tronçon avant atteint le fond de l'ouverture **22** oblongue, chaque griffe **23** élastique, libérée, retrouve par élasticité sa position initiale. Dans cette position, un bord **31** libre de la griffe **23** forme une butée qui retient par encliquetage le fil **24** de trame d'extrémité du tronçon 3 avant au fond de l'ouverture **22** oblongue.

La coopération de chaque découpe **15, 16** en L avec chaque fil **20, 21** de trame d'un même tronçon **4** arrière assure un bon maintien de l'éclisse **2** et empêche la rotation de celle-ci autour de l'un des fils **20, 21** de trame, lorsqu'elle est pré-montée sur le tronçon **4** arrière.

L'assemblage est simple et rapide, puisqu'il est réalisé par encliquetage et sans outil. Cet assemblage peut être réalisé d'une main, par un opérateur seul. L'éclisse **2** assure un assemblage robuste et fiable des tronçons **3, 4** de chemin **1** de câble.

## Revendications

1. Eclisse (2) pour l'assemblage d'un premier tronçon (3) et d'un deuxième tronçon (4) de chemins (1) de câbles en treillis de fil, cette éclisse (2) comprenant un corps (8) central et deux rebords (11) s'étendant à l'équerre et selon un sens longitudinal de l'éclisse (2), depuis deux bords (12) longitudinaux opposés du corps (8), cette éclisse comprenant :
- deux paires de découpes (15, 16) formées dans les rebords (11), à savoir une paire en partie centrale de l'éclisse (2) et une paire à une extrémité arrière de l'éclisse (2), chaque découpe (15,16) présentant une section (17) transversale s'ouvrant sur une bordure (18) libre du rebord (11), chaque paire de découpe (15,16) étant apte à coopérer avec un fil (20, 21) de trame du premier tronçon (3) ;
- une patte (25) élastique portée par le corps (8) au droit de l'une des paires de découpes (15, 16) pour bloquer au moins l'un des fils (20, 21) de trame dans la section (19) longitudinale de l'une des découpes (15, 16) ;
- une ouverture (22) oblongue pratiquée transversalement sur le corps (8) et les rebords (11), et apte à recevoir un fil (24) de trame d'extrémité du deuxième tronçon (4) ;
- une griffe (23) élastique formée dans le corps (8) au droit de l'ouverture (22), apte à bloquer le fil (24) de trame d'extrémité du deuxième tronçon (4) dans l'ouverture (22),
**caractérisée en ce que**
- les deux paires de découpes (15, 16) sont en L et présentent une section (19) longitudinale s'étendant à partir de la section (17) transversale,
- le fil de trame du premier tronçon est bloqué par la patte dans la section longitudinale de ladite paire de découpes
- l'ouverture (22) est oblongue et est pratiquée transversalement sur le corps (8) et les rebords (11) et la griffe (10) élastique est formée dans le corps (1) sur un bord de l'ouverture (22) oblongue.

2. Eclisse (**2**) selon la revendication 1 **caractérisée en ce que** la patte (**25**) élastique et la griffe (**23**) élastique coopèrent avec des fils de trame des tronçons (**3, 4**) par encliquetage des fils (**20**, **21**) de trame du premier tronçon (**3**) et d'un fil **(24)** de trame du deuxième tronçon (**4**) lorsque ceux-ci sont respectivement dans les paires de découpes (**15**, **16**) en L ainsi que dans l'ouverture **(22)** oblongue.

3. Eclisse **(2)** selon l'une quelconque des revendications précédentes **caractérisée en ce que** la patte (**25**) élastique est formée par une découpe (**26**) en U dans le corps (**8**) de l'éclisse (**2**) définissant une lumière apte à recevoir la patte (**25**) élastique, et un bord (**28**) de jonction par lequel la patte (**25**) est reliée au corps (**8**).

4. Eclisse (**2**) selon la revendication 3 **caractérisée en ce que** le corps (**8**) de l'éclisse (**2**) comporte une paire de pattes (**25**) élastiques.

5. Eclisse (**2**) selon l'une quelconque des revendications précédentes **caractérisée en ce que** la griffe (**23**) élastique est formée en saillie d'un bord (**29**) transversal de l'ouverture (**22**).

6. Eclisse (**2**) selon la revendication 5 **caractérisée en ce que** la griffe (**23**) élastique est recourbée vers un fond de l'ouverture (**22**).

7. Eclisse (**2**) selon la revendication 6 **caractérisée en ce que** le corps (**8**) de l'éclisse (**2**) comporte une paire de griffes (**23**) élastiques.

8. Eclisse (**2**) selon l'une quelconque des revendications précédentes **caractérisée en ce que** le corps (**8**) de l'éclisse (**2**) comprend un pli sensiblement à angle droit définissant deux facettes (**30**) perpendiculaires l'une par rapport à l'autre, cette éclisse (**2**) étant apte à coopérer avec une aile (**7**) latérale et le fond (**6**) de chacun des tronçons (**3**, **4**) opposés.

9. Procédé d'assemblage d'un premier tronçon (**3**) et d'un deuxième tronçon (**4**) de chemins de câbles au moyen d'une éclisse (**2**) selon l'une quelconque des revendications précédentes **caractérisé en ce que** le procédé comprend les opérations consistant à:
- insérer les fils (**20**, **21**) de trame du premier tronçon (**3)** dans les sections (**17**) transversales des découpes (**15, 16**) en L des rebords (**11**) de l'éclisse (**2**) ;
- translater l'éclisse (**2**) vers le fond des sections (**19**) longitudinales des découpes (**15**, **16**) en L jusqu'à l'encliquetage de l'un des fils (**20**, **21**) de trame par la patte (**25**) élastique ;
- engager le fil (**24**) de trame d'extrémité du deuxième tronçon (**4**) dans l'ouverture (**22**) oblongue vers le fond de celle-ci jusqu'à son encliquetage par la griffe (**23**) élastique.

10. Chemin de câbles comprenant un premier tronçon (**3**, **4**), un deuxième tronçon (**4**) et une éclisse (**2**) selon l'une quelconque des revendications 1 à 8.

## Patentansprüche

1. Schiene (2) zum Zusammenfügen eines ersten Abschnitts (3) und eines zweiten Abschnitts (4) von Kabelrinnen (1) aus Drahtgitter, wobei diese Schiene (2) einen zentralen Körper (8) und zwei Randleisten (11) enthält, die sich rechtwinklig und gemäß einer Längsrichtung der Schiene (2) von zwei gegenüberliegenden Längsrändern (12) des Körpers (8) aus erstrecken, wobei diese Schiene enthält:
- zwei in den Randleisten (11) geformte Paare von Ausschnitten (15, 16), nämlich ein Paar im zentralen Bereich der Schiene (2) und ein Paar an einem hinteren Ende der Schiene (2), wobei jeder Ausschnitt (15, 16) einen Querabschnitt (17) aufweist, der sich auf einen freien Rand (18) der Randleiste (11) öffnet, wobei jedes Paar von Ausschnitten (15, 16) geeignet ist, mit einem Schussdraht (20, 21) des ersten Abschnitts (3) zusammenzuwirken;
- eine elastische Lasche (25), die vom Körper (8) im Bereich eines der Paare von Ausschnitten (15, 16) getragen wird, um mindestens einen der Schussdrähte (20, 21) im Längsabschnitt (19) eines der Ausschnitte (15, 16) zu blockieren;
- eine längliche Öffnung (22), die quer auf dem Körper (8) und den Randleisten (11) hergestellt ist und einen End-Schussdraht (24) des zweiten Abschnitts (4) aufnehmen kann;
- eine im Körper (8) im Bereich der Öffnung (22) geformte elastische Klaue (23), die den End-Schussdraht (24) des zweiten Abschnitts (4) in der Öffnung (22) blockieren kann,
**dadurch gekennzeichnet, dass**
- die zwei Paare von Ausschnitten (15, 16) L-förmig sind und einen Längsabschnitt (19) aufweisen, der sich ausgehend vom Querabschnitt (17) erstreckt,
- der Schussdraht des ersten Abschnitts durch die Lasche im Längsabschnitt des Paars von Ausschnitten blockiert wird,
- die Öffnung (22) länglich und quer auf dem Körper (8) und den Randleisten (11) hergestellt ist, und die elastische Klaue (23) im Körper (1) auf einem Rand der länglichen Öffnung (22) geformt ist.

2. Schiene (2) nach Anspruch 1, **dadurch gekennzeichnet, dass** die elastische Lasche (25) und die elastische Klaue (23) mit Schussdrähten der Abschnitte (3, 4) durch Einrasten auf den Schussdrähten (20, 21) des ersten Abschnitts (3) und einem Schussdraht (24) des zweiten Abschnitts (4) zusammenwirken, wenn diese sich je in den L-förmigen Paaren von Ausschnitten (15, 16) sowie in der länglichen Öffnung (22) befinden.

3. Schiene (2) nach einem der vorhergehenden Ansprüche, **dadurch gekennzeichnet, dass** die elastische Lasche (25) von einem U-förmigen Ausschnitt (26) im Körper (8) der Schiene (2), der ein Langloch definiert, das die elastische Lasche (25) aufnehmen kann, und von einem Verbindungsrand (28) geformt wird, durch den die Lasche (25) mit dem Körper (8) verbunden ist.

4. Schiene (2) nach Anspruch 3, **dadurch gekennzeichnet, dass** der Körper (8) der Schiene (2) ein Paar von elastischen Laschen (25) aufweist.

5. Schiene (2) nach einem der vorhergehenden Ansprüche, **dadurch gekennzeichnet, dass** die elastische Klaue (23) von einem Querrand (29) der Öffnung (22) vorstehend geformt wird.

6. Schiene (2) nach Anspruch 5, **dadurch gekennzeichnet, dass** die elastische Klaue (23) zu einem Boden der Öffnung (22) umgebogen ist.

7. Schiene (2) nach Anspruch 6, **dadurch gekennzeichnet, dass** der Körper (8) der Schiene (2) ein Paar von elastischen Klauen (23) aufweist.

8. Schiene (2) nach einem der vorhergehenden Ansprüche, **dadurch gekennzeichnet, dass** der Körper (8) der Schiene (2) einen im Wesentlichen rechtwinkligen Knick enthält, der zwei zueinander lotrechte Flächenelemente (30) definiert, wobei diese Schiene (2) geeignet ist, mit einem seitlichen Flügel (7) und mit dem Boden (6) jedes der gegenüberliegenden Abschnitte (3, 4) zusammenzuwirken.

9. Verfahren zum Zusammenfügen eines ersten Abschnitts (3) und eines zweiten Abschnitts (4) von Kabelrinnen mittels einer Schiene (2) nach einem der vorhergehenden Ansprüche, **dadurch gekennzeichnet, dass** das Verfahren die Vorgänge enthält, die darin bestehen:
- die Schussdrähte (20, 21) des ersten Abschnitts (3) in die Querabschnitte (17) der L-förmigen Ausschnitte (15, 16) der Randleisten (11) der Schiene (2) einzufügen;
- die Schiene (2) zum Boden der Längsabschnitte (19) der L-förmigen Ausschnitte (15, 16) bis zum Einrasten der elastischen Lasche (25) auf einem der Schussdrähte (20, 21) translatorisch zu verschieben;
- den End-Schussdraht (24) des zweiten Abschnitts (4) in die längliche Öffnung (22) zu deren Boden hin einzuführen, bis die elastische Klaue (23) an ihm einrastet.

10. Kabelrinne, die einen ersten Abschnitt (3), einen zweiten Abschnitt (4) und eine Schiene (2) nach einem der Ansprüche 1 bis 8 enthält.

## Claims

1. Splice plate (**2**) for assembling a first portion (**3**) and a second portion (**4**) of cable trays (**1**) made of wire mesh, this splice plate (**2**) comprising a central body (**8**) and two flanges (**11**) extending at right angles and in a longitudinal direction of the splice plate (**2**) from two opposed longitudinal edges (**12**) of the body (**8**), this splice plate comprising:
- two pairs of cutouts (**15**, **16**) formed in the flanges (**11**), namely a pair in the central part of the splice plate (**2**) and a pair at a rear end of the splice plate (**2**), each cutout (**15**, **16**) having a transverse section (**17**) opening onto a free border (**18**) of the flange (**11**), each pair of cutouts (**15**, **16**) being able to cooperate with a weft wire (**20**, **21**) of the first portion (**3**);
- an elastic lug (**25**) borne by the body (**8**) in line with one of the pairs of cutouts (**15**, **16**) in order to block at least one of the weft wires (**20**, **21**) in the longitudinal section (**19**) of one of the cutouts (**15**, **16**);
- an oblong opening (**22**) made transversely in the body (**8**) and the flanges (**11**) and able to receive an end weft wire (**24**) of the second portion (**4**);
- an elastic claw (**23**) formed in the body (**8**) in line with the opening (**22**) and able to block the end weft wire (**24**) of the second portion (**4**) in the opening (**22**),
**characterized in that**
- the two pairs of cutouts (**15**, **16**) are L-shaped and have a longitudinal section (**19**) extending from the transverse section (**17**),
- the weft wire of the first portion is blocked by the lug in the longitudinal section of the said pair of cutouts,
- the opening (**22**) is oblong and is made transversely in the body (**8**) and the flanges (**11**), and the elastic claw (**23**) is formed in the body (**1**) on an edge of the oblong opening (**22**).

2. Splice plate (**2**) according to Claim 1, **characterized in that** the elastic lug (**25**) and the elastic claw (**23**) cooperate with weft wires of the portions (**3**, **4**) by snap-fastening the weft wires (**20**, **21**) of the first portion (**3**) and a weft wire (**24**) of the second portion (**4**) when they are respectively in the pairs of L-shaped cutouts (**15**, **16**) and in the oblong opening.

3. Splice plate (**2**) according to either one of the preceding claims, **characterized in that** the elastic lug (**25**) is formed by a U-shaped cutout (**26**) in the body (**8**) of the splice plate (**2**) defining a slot able to receive the elastic lug (**25**), and a junction edge (**28**) by means of which the lug (**25**) is connected to the body (**8**).

4. Splice plate (**2**) according to Claim 3, **characterized in that** the body (**8**) of the splice plate (**2**) comprises a pair of elastic lugs (**25**).

5. Splice plate (**2**) according to any one of the preceding claims, **characterized in that** the elastic claw (**23**) is formed so as to project from a transverse edge (**29**) of the opening (**22**).

6. Splice plate (**2**) according to Claim 5, **characterized in that** the elastic claw (**23**) is curved towards a bottom of the opening (**22**).

7. Splice plate (**2**) according to Claim 6, **characterized in that** the body (**8**) of the splice plate (**2**) comprises a pair of elastic claws (**23**).

8. Splice plate (**2**) according to any one of the preceding claims, **characterized in that** the body (**8**) of the splice plate (**2**) comprises a substantially right-angled fold defining two faces (**30**) perpendicular with respect to one another, this splice plate (**2**) being able to cooperate with a lateral wing (**7**) and the bottom (**6**) of each of the opposed portions (**3**, **4**).

9. Method for assembling a first portion (**3**) and a second portion (**4**) of cable trays by means of a splice plate (**2**) according to any one of the preceding claims, **characterized in that** the method comprises the operations consisting in:
- inserting the weft wires (**20**, **21**) of the first portion (**3**) in the transverse sections (**17**) of the L-shaped cutouts (**15**, **16**) of the flanges (**11**) of the splice plate (**2**);
- translating the splice plate (**2**) towards the bottom of the longitudinal sections (**19**) of the L-shaped cutouts (**15**, **16**) until one of the weft wires (**20**, **21**) has been snap-fastened by the elastic lug (**25**);
- engaging the end weft wire (**24**) of the second portion (**4**) in the oblong opening (**22**) towards the bottom thereof until it is snap-fastened by the elastic claw (**23**).

10. Cable tray comprising a first portion (**3**), a second portion (**4**) and a splice plate (**2**) according to any one of Claims 1 to 8.
